Europäisches Patentamt

European Patent Office

Office européen des brevets

(19)

(11) Veröffentlichungsnummer : **0 368 093 B1**

(12) **EUROPÄISCHE PATENTSCHRIFT**

(45) Veröffentlichungstag der Patentschrift :
15.03.95 Patentblatt 95/11

(51) Int. Cl.$^6$ : **G11B 5/706, C01G 37/027**

(21) Anmeldenummer : **89119964.8**

(22) Anmeldetag : **27.10.89**

(54) **Herstellung von nadelförmigem, im wesentlichen aus eisenhaltigem Chromdioxid bestehenden, ferromagnetischen Material.**

(30) Priorität : **05.11.88 DE 3837646**

(43) Veröffentlichungstag der Anmeldung :
**16.05.90 Patentblatt 90/20**

(45) Bekanntmachung des Hinweises auf die
Patenterteilung :
**15.03.95 Patentblatt 95/11**

(84) Benannte Vertragsstaaten :
**DE FR GB NL**

(56) Entgegenhaltungen :
**DE-A- 2 520 030**
**IEEE TRANSACTIONS ON MAGNETICS, Band MAG-23, Nr. 1, Januar 1987, Seiten 83-85;G. BOTTONI et al.: "Thermal stabilization processes on CrO2 powders modifiedwith Fe dopants"**

(73) Patentinhaber : **BASF Aktiengesellschaft**
**Carl-Bosch-Strasse 38**
**D-67063 Ludwigshafen (DE)**

(72) Erfinder : **Mueller, Michael Wolfgang, Dr.**
**Neurott 56**
**D-6831 Plankstadt (DE)**
Erfinder : **Schwab, Ekkehard, Dr.**
**Berwartsteinstrasse 4**
**D-6730 Neustadt (DE)**
Erfinder : **Auweter, Helmut, Dr.**
**Lessingstrasse 35**
**D-6703 Limburgerhof (DE)**
Erfinder : **Feser, Rainer, Dr.**
**Colgensteiner Weg 25**
**D-6718 Gruenstadt (DE)**
Erfinder : **Lehnert, Rudi, Dr.**
**Goeteborger Weg 23**
**D-6700 Ludwigshafen (DE)**
Erfinder : **Mueller, Norbert, Dr.**
**Maximilianstrasse 23**
**D-6701 Friedelsheim (DE)**
Erfinder : **Ohlinger, Manfred, Dr.**
**Anselm-Feuerbach-Strasse 13**
**D-6710 Frankenthal (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein nadelförmiges, im wesentlichen aus eisenhaltigem Chromdioxid bestehendes, ferromagnetisches Material, welches sich insbesondere durch eine hohe Koerzitivfeldstärke auszeichnet sowie ein Verfahren zu dessen Herstellung.

Nadelförmiges Chromdioxid, seine Herstellung sowie die Verwendung dieses Materials für magnetische Aufzeichnungsträger ist vielfach beschrieben. Magnetische Aufzeichnungsträger, die Chromdioxid enthalten, zeigen im allgemeinen gegenüber Aufzeichnungsträgern auf Basis anderer magnetischer Oxide überlegene magnetische Eigenschaften, welche auf die hohen Werte bei der Koerzitivfeldstärke, der spezifischen remanenten Magnetisierung und Sättigungsmagnetisierung sowie insbesondere auf die einheitliche Form und die geringen Abmessungen der nadelförmigen Chromdioxid-Teilchen zurückzuführen sind.

Neben der Synthese des Chromdioxids durch eine unter hydrothermalen Bedingungen ablaufenden Synproportionierung aus Chrom(III)- und Chrom(VI)oxiden (u.a. EP-A 27 640) ist auch die Herstellung von nadelförmigem Chromdioxid durch thermische Zersetzung von hydratisiertem Chrom(III)chromat bekannt. So wird in der DE-A 22 10 059 ein Verfahren beschrieben, bei dem $Cr_2(CrO_4)_3 \cdot nH_2O$, worin n 1 bis 8 bedeutet, bei Temperaturen zwischen 250 und 500°C und unter Drücken zwischen 30 und 1000 bar zum Chromdioxid zersetzt wird. Das dabei entstehende Produkt weist eine für die inzwischen üblichen Aufzeichnungsmedien zu geringe Koezitivfeldstärke auf, welche bei den höheren Werten für n sogar noch weiter abfällt. Für den Fall, daß die Werte für n größer als 8 sind, verringert sich durch das dann gleichzeitig entstehende CrOOH auch noch die remanente Magnetisierung und die Sättigungsmagnetisierung. Eine Verbesserung der magnetischen Eigenschaften läßt sich mit einem Verfahren gemäß der DE-A 23 32 854 erreichen, bei dem eine unter den gegebenen Reaktionsbedingungen sich exotherm zersetzende Substanz dem Chrom(III)chromat beigemischt wird. Auch die Modifizierung des Chromdioxids mit Lanthan, Yttrium, Barium oder Strontium soll, wie in der DE-A 23 19 572 angegeben, eine Anhebung der magnetischen Kenndaten bewirken. Des weiteren läßt sich modifiziertes Chromdioxid ebenfalls aus Chrom(III)chromaten mit einem höheren Wassergehalt (Hydratationsgrad n 8 bis 12) herstellen (DE-B 25 20 030 und DE-B 26 48 305).

Allen diesen Verfahren zur Chromdioxid-Herstellung aus Chrom(III)chromaten ist gemeinsam, daß zur Vermeidung eines durch die CrOOH-Bildung verursachten Abfalls der Sättigungsmagnetisierung nur relativ wasserarme Chrom(III)chromate mit einem Hydratationsgrad n von höchstens 12 eingesetzt werden können. Die wasserarmen Produkte sind weitgehend pulverförmig und erfordern deshalb einen erhöhten sicherheitstechnischen Aufwand, wie z.B. die Kapselung der Apparaturen oder das Anbringen von Absaugvorrichtungen. Es wurde deshalb schon vorgeschlagen zur Behebung dieser Probleme ein Chrom(III)chromat mit einem Hydratationsgehalt von größer 13 einzusetzen. Dieses Verfahren hatte zudem den Vorteil, daß sich entgegen den früheren Annahmen die magnetischen Eigenschaften des resultierenden Chromdioxids verbessern ließen.

Diese Verbesserungen sind im Rahmen der Bemühungen zu sehen, die magnetischen Eigenschaften des Chromdioxids und hierbei insbesondere die Koerzitivfeldstärke derart anzuheben, daß sich dieses Material auch zum Einsatz bei der Herstellung solcher magnetischer Aufzeichnungsträger verwenden läßt, welche für die neuentwickelten Aufzeichnungsverfahren mit hoher Aufzeichnungsdichte, vor allem auf dem Videogebiet, erforderlich sind. Es war zwar schon bekannt (FR-B-25 02 384), durch Dotierung mit Iridium ein Chromdioxid mit sehr hoher Koerzitivfeldstärke herzustellen, jedoch ließ sich dieses Verfahren aus wirtschaftlichen Gründen nicht realisieren. Gleiches gilt auch für die Beschichtung des Chromdioxids mit Kobaltverbindungen, wodurch sich die Koerzitivfeldstärke deutlich erhöhen ließ (Tatsuru Namikawa et al., Nippon Kugaku Kaishi 1980 (2), 194-8).

Aufgabe der Erfindung war es somit, ein Verfahren zur Herstellung eines nadelförmigen, ferromagnetischen Chromdioxidmaterials bereitzustellen, das ohne Zusatz von Iridium und ohne Kobaltbeschichtung in einfacher Weise zu einem ferromagnetischen Chromdioxidmaterial führt, das eine sehr hohe Koerzitivfeldstärke bei gleichzeitig hohen Werten für die Sättigungsmagnetisierung aufweist.

Gegenstand der Erfindung ist somit ein Verfahren zur Herstellung eines nadelförmigen, im wesentlichen aus eisenhaltigem Chromdioxid bestehenden, ferromagnetischen Materials, das, bezogen auf den Anteil an Chromdioxid, weniger als 2 ppm Iridium und weniger als 50 ppm Kobalt enthält und eine Koerzitivfeldstärke von größer 61 kA/m bei einer Magnetisierung von mehr als 70 $nTm^3/g$, gemessen in einem Magnetfeld von 380 kA/m, aufweist, durch Zersetzung eines wasserhaltigen Chrom(III)chromats bei Temperaturen von 200 bis 500°C und unter einem Druck zwischen 50 und 700 bar, wobei ein wasserhaltiges Chrom(III)chromat der Formel $Cr_2(CrO_4)_3 \cdot nH_2O$ mit einem Hydratationsgrad n von mindestens 13, das Eisen und/oder eine Eisenverbindung als Modifizierungsmittel enthält, eingesetzt wird und dieses wasserhaltige Chrom(III)chromat in einem Hochdruckreaktor auf eine Temperatur zwischen 200 und 500°C aufgeheizt und unmittelbar nach Erreichen dieser Temperatur abgekühlt und der Hochdruckreaktor entspannt wird.

Das erfindungsgemäße Verfahren läßt sich besonders vorteilhaft durchführen, wenn das Chrom(III)chromat mit einem Hydratationsgrad n von mindestens 13 und vorzugsweise von 14 bis 20 dadurch erhalten wird, daß das Chrom(VI)oxid ($CrO_3$) nur mit soviel Wasser versetzt wird, daß nach der partiellen Reduktion des $CrO_3$ mit organischem Material der erforderliche Wassergehalt des Chrom(III)chromats sich einstellt. Hierbei ist die bei der Reduktion sich bildende Wassermenge zu berücksichtigen.

Da bei der Herstellung der wasserreichen Chrom(III)chromate das $CrO_3$ meist nicht mit einer zur vollständigen Auflösung ausreichenden Wassermenge versetzt wird, ist es von Vorteil, die $CrO_3/H_2O$-Ausgangssuspension zusammen mit den Modifizierungsmitteln einer intensiven Dispergierung, z.B. mit einem Dissolverrührer, zu unterziehen. Die Reduktion des $CrO_3$ ist mit einer starken Wärmetönung verbunden. Um zu verhindern, daß sich die Reaktionssuspension dabei zu stark erwärmt, empfiehlt es sich, das Reaktionsgefäß bei der Reduktion zu kühlen. Zur Abmilderung der meist heftigen Reaktion zwischen organischem Material und $CrO_3$ hat es sich als günstig erwiesen, das Reduktionsmittel mit Wasser zu verdünnen. Um bei diesem Vorgehen jedoch nicht den Gesamtwassergehalt des Chrom(III)chromats zu verändern, muß die zum Anlösen des $CrO_3$ herangezogene Wassermenge um die zur Verdünnung des Reduktionsmittels verwendete Wassermenge verringert werden. Am günstigsten erwies es sich, von den n Molen $H_2O$ des $Cr_2(CrO_4)_3 \cdot n\ H_2O$ vier Mol zur Verdünnung des Reduktionsmittels und die restlichen (n-4) Mole zur Herstellung der $CrO_3$-Suspension zu verwenden.

Als Reduktionsmittel für die Chrom(III)chromat-Darstellung können alle gängigen Reduktionsmittel verwendet werden, bevorzugt werden jedoch leicht oxidierbare organische Verbindungen wie Alkohole und Aldehyde, insbesondere weniger flüchtige mehrwertige Alkohole wie Glykol oder Glycerin. Das $Cr^{6+}/Cr^{3+}$-Molverhältnis im Chrom(III)chromat sollte nach Möglichkeit 1,5 betragen, es kann auch mit einem $Cr^{6+}$-Über- oder Unterschuß gearbeitet werden.

Im Rahmen des erfindungsgemäßen Verfahrens werden modifizierte Chromdioxid-Materialien hergestellt, wobei es angebracht ist, die bekannten Modifizierungsmittel, wie Antimon, Tellur, Eisen und/oder deren Verbindungen sowie Kombinationen dieser Stoffe, einzusetzen. Üblicherweise eignen sich besonders Kombinationen von Telluroxid und/oder Antimonoxid, ggf. in Form des Kaliumantimonyltartrats (EP-A 198 110) und Eisenoxid. Die Modifizierungsmittel werden in Mengen zwischen 0,05 und 10 Gew.% berechnet als Oxid, bezogen auf das resultierende Chromdioxid eingesetzt. Nach Möglichkeit sollten die Modifizierungsstoffe bereits vor der Reduktionsmittelzugabe in die $CrO_3$-Suspension eingeführt werden.

Die Durchführung des erfindungsgemäßen Verfahrens erfolgt beispielsweise derart, daß das $CrO_3$ mit weniger Wasser versetzt wird, als zur Einstellung des vorgegebenen Hydratationsgrads beim Chrom(III)chromat von mindestens 13 erforderlich ist. Nach Zugabe der Modifizierungsmittel in die zähe Masse wird die Mischung mit geeigneten Vorrichtungen intensiv dispergiert. Anschließend wird die resultierende Suspension in einem mit Tropftrichter und Rückflußkühlung versehenen, von außen kühlbaren Rührbehälter unter guter Durchmischung durch langsame Zugabe eines mit der restlichen, zur Einstellung des endgültigen Wassergehalts des Chrom(III)chromats erforderlichen Wassermenge versetzten organischen Reduktionsmittels, z.B. Glycerin, reduziert. Das entstehende pastöse Chrom(III)chromat wird in einen Reaktionsbecher aus Edelstahl überführt und anschließend in einem Hochdruckreaktor bei einem Druck zwischen 50 bis 700 bar und einer Temperatur zwischen 200 bis 500°C zu Chromdioxid umgesetzt. Wesentlich bei dem erfindungsgemäßen Verfahren ist, daß unmittelbar nach dem Erreichen der Reaktionstemperatur das resultierende Material wieder abgekühlt wird, wobei insbesondere die Temperatur von 220 bis 250°C schnell unterschritten werden muß. Dadurch wird ein homogener Einbau der Eisenionen in das Kristallgitter des Chromdioxids erreicht. Gleichzeitig mit oder nach dem Abkühlen wird auch der Hochdruckreaktor entspannt. Das Chromdioxid wird aus dem Reaktionsbecher mechanisch entfernt und aufgemahlen.

Zur weiteren Verbesserung der synthetisierten Chromdioxide ist die thermische Nachbehandlung unter oxidativen Bedingungen bei Temperaturen zwischen 150 und 400°C bekannt (DE-B 19 05 584). Gegebenenfalls kann das auf die geschilderte Weise gewonnene Chromdioxid in bekannter Weise noch weiter stabilisiert werden, z.B. durch die oberflächliche Einwirkung von Reduktionsmitteln (DE-B 1 925 541), von Laugen (DE-A 3 600 624), durch eine Temperung unter Inertgas (EP-A 29 687) oder durch Behandlung mit wasserunlöslichen organischen Verbindungen und einem Tensid (DE-A-36 10 411).

Das erfindungsgemäß, im wesentlichen aus Chromdioxid bestehende Material weist eine Koerzitivfeldstärke von mehr als 61 kA/m und vorzugsweise eine solche zwischen 61 und 78 kA/m auf, wobei die Magnetisierung, gemessen in einem Magnetfeld von 380 kA/m, mehr als 70 $nTm^3/g$ beträgt. Diese hohen Werte für die Koerzitivfeldstärke werden überraschenderweise weder durch eine Dotierung des Chromdioxids mit Iridium noch durch eine Beschichtung mit Kobalt erreicht.

Damit eignet sich dieses Chromdioxidmaterial in besonders vorteilhafter Weise für den Einsatz bei solchen magnetischen Aufzeichnungsträgern, welche bei der Aufzeichnung hoher Informationsdichten zur Anwendung gelangen sollen. Die Verarbeitung des erfindungsgemäßen Chromdioxids zu magnetischen Aufzeichnungsträgern erfolgt nach bekannten Methoden. Für die Herstellung der Magnetschicht werden 2 bis 10 Gew.-Teile Chromdioxid zusammen mit dem Bindemittel und den geeigneten Dispergierhilfsmitteln, Gleitmitteln und weiteren üblichen Zusatzstoffen in einer Gesamtmenge bis zu 10 Gew.% des Chromdioxids zu einer Dispersion verarbeitet. Die so erhaltene Dispersion wird filtriert und mit einer üblichen Beschichtungsmaschine, z.B. mittels eines Linealgießers, auf den unmagnetischen Träger in einer oder mehreren dünnen Schichten oder auf einen mit einer anderen Magnetschicht bereits versehenen Magnetogrammträger in dünner Schicht aufgetragen. Vor Trocknung der flüssigen Beschichtungsmischung bei Temperaturen zwischen 50 und 90°C wird gegebenenfalls eine magnetische Ausrichtung der Chromdioxidteilchen vorgenommen. Für eine spezielle Oberflächenvergütung der Magnetschicht werden die beschichteten Folienbahnen zwischen geheizten, polierten Walzen unter Druck hindurchgeführt. Danach betragen die Dicken der Magnetschichten üblicherweise zwischen 1,5 und 12 μm.

Als Bindemittel für die Magnetschichten werden die bekannten Polymerbindemittel verwendet, wie Acrylat-Copolymere, Polyvinylacetate, wie Polyvinylformal oder Polyvinylbutyral, höhermolekulare Epoxidharze, Polyurethane und Gemische dieser und ähnlicher Bindemittel. Als vorteilhaft haben sich die in einem flüchtigen organischen Lösungsmittel löslichen elastomeren und praktisch isocyanatgruppenfreien linearen Polyesterurethane erwiesen, wie sie durch Umsetzung eines Polyesters aus einer aliphatischen Dicarbonsäure mit 4 bis 6 C-Atomen, wie Adipinsäure, und mindestens einem aliphatischen Diol mit 3 bis 10 C-Atomen, wie 1,2- und 1,3-Propylenglykol, 1,4-Butandiol, Diethylenglykol, Neopentylglykol oder 1,8-Octandiol, mit einem Diisocyanat mit 6 bis 24 und insbesondere 8 bis 20 C-Atomen, wie Toluylendiisocyanat oder 4,4'-Diisocyanatodiphenylmethan, bevorzugt in Gegenwart einer kleineren Menge eines Glykols mit 4 bis 10 C-Atomen, wie 1,4-Butandiol, das eine Kettenverlängerung bewirkt, hergestellt werden können. Bevorzugt sind solche Polyesterurethane aus Adipinsäure, 1,4-Butandiol und 4,4'-Diisocyanatodiphenylmethan. Bevorzugte Polyesterurethane haben eine Shore-Härte A von 70 bis 100, eine Reißfestigkeit von 40 bis 42 N/mm² (nach DIN 53 455) und eine Reißdehnung (nach DIN 53 455) von etwa 440 bis 560 %. Der K-Wert nach H. Fikentscher (Cellulose-Chemie 13 (1932), Seite 58ff) liegt für die besonders geeigneten Polymerbindemittel zwischen 40 und 60 (1%ig in DMF).

Die Erfindung sei anhand folgender Beispiele im Vergleich zu solchen nach dem Stand der Technik näher erläutert. Dabei wurden an dem resultierenden Chromdioxid die spezifische Oberfläche SSA in [m²/g] gemäß DIN 66132 mittels eines Ströhlein-Areameters der Firma Ströhlein, Düsseldorf, nach dem Einpunkt-Differenzverfahren nach Haul und Dümbgen sowie die magnetischen Eigenschaften mittels eines Schwingmagnetometers in einem Meßfeld von 380 kA/m bestimmt, und zwar die Koerzitivfeldstärke $H_c$ in [kA/m] sowie die spezifische Remanenz $Mr/\rho$ und die Sättigungsmagnetisierung $Ms/\rho$ in [nTm³/g]. Dabei betrug die mittlere Stopfdichte $\rho$ = 1,3 g/cm³.

Die Ermittlung der Kobalt- und Iridiummenge erfolgte durch Atomabsorptionsspektrometrie. Die Röntgenaufnahmen wurden mit einem automatischen Siemens D 500 mit Kupfer-Kα-Strahlung hergestellt. Zur Bestimmung der Gitterkonstanten wurden die $CrO_2$-Proben mit MICA (MBS-Standard SRM No. 675) als innerem Standard vermischt und die Messungen bei 20°C durchgeführt. Die Lage der $CrO_2$ (110)-Linie wurde auf den theoretischen Wert der MICA-Line (Theta 26,774°C) bezogen und aus der gemessenen Differenz die Gitterkonstante a in [Å] berechnet.

Die Längenangabe der $CrO_2$-Teilchen stellt einen arithmetischen Mittelwert dar, der durch die statistische Erfassung und Ausmessung von etwa 200 Teilchen auf elektronenmikroskopischen Aufnahmen ermittelt wurde.

Beispiel 1

1,5 kg $CrO_3$ wurden in einem zunächst oben offenen Rührbehälter aus Glas mit 447 g Wasser versetzt und 10 Minuten mit einem Dissolverrührer mit 1430 Umdrehungen/min dispergiert. Die vorgelegte Wassermenge reichte für eine vollständige Auflösung des $CrO_3$ nicht aus. Anschließend wurden 3,3 g $TeO_2$ (≙ 0,26 Gew.%, bezogen auf das sich bildende $CrO_2$) und 45,3 g $Fe_2O_3$ (≙ 3,6 Gew.%) in die Suspension gegeben und das Reaktionsgefäß mit einem mit Rückflußkühler und Tropftrichter versehenen Deckel verschlossen. Das Reaktionsgefäß wurde zudem mit einem, von einem starken Motor angetriebenen Rührer ausgestattet. Unter Rückflußkühlung, Eiskühlung der Reaktorwand sowie starkem Rühren der $CrO_3$-Suspension werden aus dem Tropftrichter in 120 Minuten 334 g Wasser und 118,4 g Glycerin langsam in die Reaktionssuspension eingeleitet. Es resultiert ein Te/Fe-modifiziertes Chrom(III)chromat mit einem $H_2O$-Gehalt n = 16.

Das auf die oben genannte Art gewonnene $Cr_2(CrO_4)_3 \cdot 16\ H_2O$ wurde in einen zylindrischen Becher aus Edelstahl eingefüllt und in einem Hochdruckreaktor auf 350°C bei einem Druck von 350 bar aufgeheizt und sofort nach Erreichen der Temperatur wieder abgekühlt. Ebenfalls wurde der Reaktor entspannt. Nach Abkühlen auf Zimmertemperatur wurde das gebildete $CrO_2$ mechanisch aus dem Reaktionsbecher ausgeräumt.

Das Reaktionsprodukt wurde danach 80 Minuten lang bei 180°C getempert. Es wies eine Koerzitivfeldstärke von 71,4 kA/m, eine spezifische Magnetisierung $Ms/\rho$ von 92 nTm³/g und eine Remanenz von 43 nTm³/g auf. Der Iridiumgehalt betrug weniger als 2 ppm und der Kobaltgehalt weniger als 30 ppm. Der SSA-Wert war 20 m²/g, die Gitterkonstante a 4,430 ± 0,0015 Å und die mittlere Teilchenlänge 300 nm.

Beispiel 2

1500 g $CrO_3$ wurden in einem zunächst oben offenen Rührbehälter aus Glas mit 447 g Wasser versetzt und 10 min. mit einem Dissolverrührer dispergiert. Die vorgelegte Wassermenge reichte für eine vollständige Auflösung des $CrO_3$ nicht aus. Anschließend wurden 45,3 g $Fe_2O_3$ (3,6 Gew.%), 1,89 g $TeO_2$ (0,15 Gew.%) und 5,77 g Kaliumantimonyltartrat (0,2 Gew.%) zugegeben und die Mischung erneut 10 min. mit dem Dissolverrührer dispergiert. Danach wurde das Reaktionsgefäß mit einem mit Rückflußkühler und Tropftrichter ausgestatteten Deckel verschlossen.

Unter Rückflußkühlung, Eiskühlung der Reaktorwand sowie Rühren der $CrO_3$ Suspension wurden in 48 min. 117,3 g Glycerin in 924 g Wasser zugetropft. Es resultierte ein Te/Sb/Fe modifiziertes Chrom(III)chromat mit einem $H_2O$-Gehalt n = 16.

Das erhaltene Produkt wurde in Portionen von je 170 g in zylindrische Becher aus Edelstahl umgefüllt und in einem Hochdruckreaktor bei folgenden Bedingungen umgesetzt:

Beispiel 2a:

Aufheizen auf 320°C (max. Druck 176 bar), danach sofort abkühlen auf Raumtemperatur, Reaktor anschließend entspannt.

Beispiel 2b:

Aufheizen auf 340°C (max. Druck 224 bar), danach sofort abkühlen auf Raumtemperatur, Reaktor anschließend entspannt.

Das Produkt wurde aus dem Reaktionsbecher ausgeräumt, mit Wasser bis auf eine Leitfähigkeit des Waschwassers von < 100 µS/cm gewaschen und getrocknet. Die Produkte weisen folgende magnetische Eigenschaften auf:

|  | $H_C$ [kA/m] | $M_S/\varrho$ [nTm³/g] | $M_S/\varrho$ [nTm³/g] | SSA [m²/g] |
|---|---|---|---|---|
| Beispiel 2a | 78.0 | 87.5 | 42.8 | 19 |
| Beispiel 2b | 66.7 | 93.4 | 46.1 | 22 |

Die Gitterkonstanten a des Pigments aus Beispiel 2a betrug 4,432 ± 0,0015 Å, die des Pigments aus Beispiel 2b 4,426 ± 0,0015 Å. Die mittlere Teilchenlänge des Pigments aus Beispiel 2a betrug 350 nm, die des Pigments aus Beispiel 2b 300 nm.

Beispiel 3

Es wurde wie in Beispiel 2 verfahren, jedoch mit dem Unterschied, daß die Dotierungsstoffe, 45,3 g γ-$Fe_2O_3$ (3,6 Gew.%), 3,28 g $TeO_2$ (0,26 Gew.%), gemeinsam mit der Vorlage aus 1,5 kg $CrO_3$ und 447,5 g $H_2O$ für 10 min. mit dem Dissolverrührer dispergiert wurden.

Das erhaltene Te/Fe modifizierte Chrom (III)chromat mit 16 Kristallwasser wurde in einen zylindrischen Becher aus Edelstahl eingefüllt und in einem Hochdruckreaktor auf 318°C bei einem Druck von 240 bar aufgeheizt und sofort nach Erreichen der Temperatur wieder abgekühlt. Danach wurde entspannt und das gebildete $CrO_2$ aus dem Reaktor ausgeräumt.

Das Reaktionsprodukt wurde 80 min. lang bei 180°C an Luft getempert, anschließend mit Wasser solange gewaschen, bis das Waschwasser eine Leitfähigkeit von < 100 µS/m aufwies und schließlich gemäß DE-B 19 25 541 mit einer Natriumsulfitlösung oberflächenbehandelt.

Das getrocknete Endprodukt wies folgende Daten auf:

| $H_c$ [kA/m] | $M_s/\varrho$ [nTm$^3$/g] | $M_r/\varrho$ [nTm$^3$/g] | SSA [m$^2$/g] |
|---|---|---|---|
| 73.2 | 90.1 | 41.2 | 36 |

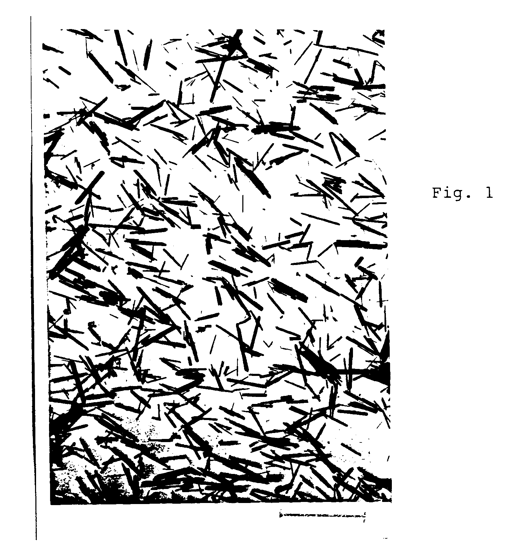

Die Gitterkonstante a entspricht 4,428 ± 0,0015 Å, die durchschnittliche Nadellänge beträgt 300 nm (Abb. 1).

Beispiel 4

Es wurde wie im Beispiel 2 verfahren, jedoch mit dem Unterschied, daß als Dotierungsstoffe 45,3 g $\gamma$-Fe$_2$O$_3$ (3,6 Gew.%) und 4,42 g TeO$_2$ (0,35 Gew.%) verwendet wurden.

Das erhaltene Te/Fe-modifizierte Chrom(III)chromat mit 16 Kristallwasser wurde in einem zylindrischen Becher aus Edelstahl eingefüllt und in einem Hochdruckreaktor auf 340°C bei einem Druck von 216 bar aufgeheizt, und sofort nach Erreichen der Temperatur wieder abgekühlt. Danach wurde das gebildete CrO$_2$ aus dem Reaktor ausgeräumt und mit Wasser solange gewaschen bis das Waschwasser eine Leitfähigkeit von < 100 µS/m aufwies.

Das Endprodukt wies folgende Eigenschaften auf:

| $H_c$ [kA/m] | $M_m/\varrho$ [nTm$^3$/g] | $M_r/\varrho$ [nTm$^3$/g] | SSA [m$^2$/g] | a [Å] |
|---|---|---|---|---|
| 61.4 | 95.3 | 45.5 | 31.4 | 4,428 ± 0,0015 |

Vergleichsversuch 1

Es wurde wie in Beispiel 1 beschrieben verfahren. Jedoch wurde das Reaktionsgemisch nach Erreichen der Reaktionstemperatur von 350°C noch 4 Stunden auf dieser Temperatur gehalten.

Nach der in Beispiel 1 genannten Aufarbeitung ergaben sich eine Koerzitivfeldstärke von 59,8 kA/m, eine spezifische Magnetisierung von 92 nTm$^3$/g und eine Remanenz von 42,1 nTm$^3$/g. Der Iridiumgehalt war unter 2 ppm, der Cobaltgehalt unter 30 ppm.

Die spezifische Oberfläche wurde mit 19 m$^2$/g bestimmt, die Gitterkonstante betrug 4,428 ± 0,0015 Å und die mittlere Teilchengröße 300 nm.

Vergleichsversuch 2

Es wurde wie in Beispiel 2 beschrieben verfahren, jedoch auf die Zugabe von Dotierungsstoffen verzichtet. Die nach der Anmaischung erhaltenen Produkte wurden einer Hochdruckbehandlung unterworfen und folgenden Bedingungen ausgesetzt.

Vergleichsversuch 2a)

Aufheizen auf 350°C (max. Druck 320 bar) danach sofort abkühlen auf Raumtemperatur, Reaktor anschließend entspannen.

Vergleichsversuch 2b)

Aufheizen auf 330°C (max. Druck 232 bar) danach sofort abkühlen auf Raumtemperatur, Reaktor anschließend entspannen.

Das entstandene Pulver wurde mechanisch aus den Reaktionsgefäßen ausgeräumt. Folgende Pulvereigenschaften wurden bestimmt:

|     | $H_c$ [kA/m] | $M_m/\varrho$ [nTm³/g] | $M_r/\varrho$ [nTm³/g] | SSA [m²/g] |
|-----|-----|-----|-----|-----|
| 2a  | 0   | 2.9 | 0.1 | 2   |
| 2b  | 0   | 2.1 | 0.1 | 1   |

Röntgenographisch konnte das entstehende Pulver als α-CrOOH identifiziert werden.

Vergleichsversuch 3

In einem Reaktionsgefäß mit einem Volumen von 2 l wurden 380 g $H_2O$ vorgelegt. Dann wurden unter Rühren zunächst 973 g $CrO_3$ zugegeben, anschließend 48,5 g γ-$Fe_2O_3$ (3,6 Gew.%, bezogen auf Chromdioxid) und 5,56 g Kaliumantimonyltartrat (0,18 Gew.%, bezogen auf Chromdioxid). Jetzt wurden unter ständigem Rühren 480 g Chrom(III)oxid eingetragen und weitere 30 min gerührt. Danach wurde die Reaktionsmaische in einem Autoklaven unter folgenden Bedingungen behandelt.

Vergleichsversuch 3 a)

Aufheizen auf 330°C, 4 h halten (max. Druck 380 bar), danach sofort auf Raumtemperatur abkühlen und anschließend Reaktor entspannen.

Vergleichsversuch 3 b)

Aufheizen auf 350°C, 4 h halten (max. Druck 310 bar), danach sofort abkühlen und anschließend den Reaktor entspannen.

Vergleichsversuch 3 c)

Aufheizen auf 320°C, 4 h halten (max. Druck 288 bar), danach sofort abkühlen und anschließend den Reaktor entspannen.

Die Produkte wurden 80 min bei 180°C an Luft getempert. Folgende Ergebnisse wurden erhalten:

|       | $H_c$ [kA/m] | $M_s/\varrho$ [nTm³/g] | $M_r/\varrho$ [nTm³/g] | SSA [m²/g] |
|-------|-----|-----|-----|-----|
| 3 a)  | 58.4 | 98.2 | 47.3 | 32  |
| 3 b)  | 58.5 | 98.7 | 48.2 | 33  |
| 3 c)  | 58.3 | 99.2 | 49.4 | 31  |

Die Gitterparameter a der Produkte betrugen bei allen drei Versuchen 4,427 ± 0,0015 Å, die durchschnittlichen Nadellängen 280 - 300 nm.

Vergleichsbeispiel 4

Mit einem Dissolverrührer wurden 121,7 g $CrO_3$, 47.5 g $H_2O$ sowie 60 g $Cr_2O_3$ unter Bildung einer zähviskosen dunklen Paste dispergiert. Die erhaltene Masse wurde in einen zylindrischen Behälter aus Edelstahl eingefüllt und in einem Hochdruckreaktor auf 350°C aufgeheizt (maximaler Druck 304 bar) und anschließend 4 h bei dieser Temperatur gehalten. Anschließend wurde abgekühlt und der Reaktor bei Raumtemperatur entspannt.

Das entstandene $CrO_2$ wurde mechanisch aus dem Reaktionsbehälter ausgeräumt. Folgende Pulvereigenschaften wurden bestimmt:

7

| $H_c$ [kA/m] | $M_S/\varrho$ [nTm$^3$/g] | $M_r/\varrho$ [nTm$^3$/g] | SSA [m$^2$/g] |
|---|---|---|---|
| 31.2 | 101.9 | 43.9 | 13.0 |

Die durchschnittliche Nadellänge betrug 250 nm, die Gitterkonstante a wurde zu 4,424 ± 0,0015 Å gemessen.

Beispiel B1

In einer 500 Volumenteile fassenden und mit 100 Volumenteilen Stahlkugeln mit einem Durchmesser von 1,5 mm gefüllten Mühle wurden 40 Teile des gemäß Beispiel 1 erhaltenen und einer Natriumsulfitlösung nachbehandelten Chromdioxids mit 175 Teilen einer 13 %igen Lösung eines thermoplastischen Polyesterurethans aus Adipinsäure, 1,4-Butandiol, 4,4'-Diisocyanatodiphenylmethan in einem Gemisch aus gleichen Teilen Tetrahydrofuran und Dioxan, 150 Teile einer 13 %gen Lösung eines handelsüblichen Polyvinylformals in einer Mischung aus gleichen Teilen Tetrahydrofuran und Dioxan, 24 Teile eines Lösungsmittelgemisches aus gleichen Teilen Tetrahydrofuran und Dioxan und 1 Teil Zinkstearat gemischt und 4 Stunden dispergiert. Danach wurden nocheinmal die gleichen Mengen der beiden Bindemittellösungen, 13,5 Teile des genannten Lösungsmittelgemisches sowie 0,1 Teile eines handelsüblichen Silikonöls zugefügt und weitere 30 Minuten dispergiert. Anschließend wurde die Dispersion filtriert und auf einer üblichen Beschichtungsmaschine mittels eines Linealgießers auf eine Polyethylenterephthalatfolie in einer solchen Dicke aufgebracht, daß sich nach dem Trocknen und Kalandrieren eine Trockenschichtdicke von 5,5 µm ergab. Unmittelbar nach dem Aufgießen der flüssigen Dispersion wurden die nadelförmigen Chromdioxidteilchen durch ein Magnetfeld längs der Aufzeichnungsrichtung orientiert. Die an den Bandproben gemessenen magnetischen Eigenschaften, die Koerzitivfeldstärke $H_c$ in [kA/m], die remanente Magnetisierung $M_r$ in [mT] sowie die relative Remanenz Mr/Ms, der Richtfaktor Rf, das Verhältnis der Remanenz längs längs zu der quer zur Orientierung und die Schaltfeldstärkenverteilung SFD nach Williams und Comstock (AIP Conf. Proc. 5 (1971), 738) sind in der Tabelle angegeben.

Beispiele B 2 - B 5

Es wurde wie in Beispiel B 1 beschrieben verfahren, jedoch wurden die in der Tabelle angegebenen Chromdioxidmaterialien eingesetzt.

Tabelle

| | CrO$_2$ aus | $H_c$ [kA/m] | Mr [mT] | Mr/Ms | RF | SFD |
|---|---|---|---|---|---|---|
| B 1 | Bsp. 1 | 69.3 | 146 | 0.89 | 3.4 | 0.22 |
| B 2 | Bsp. 2a | 77.5 | 147 | 0.85 | 2.5 | 0.21 |
| B 3 | Bsp. 4 | 63.9 | 146 | 0.89 | 4.0 | 0.25 |
| B 4 | Vergl. Vers. 1 | 58.2 | 150 | 0.88 | 3.1 | 0.23 |
| B 5 | Vergl. Vers. 3a) | 58.8 | 147 | 0.87 | 3.3 | 0.20 |

**Patentansprüche**

1.  Verfahren zur Herstellung eines nadelförmigen, im wesentlichen aus eisenhaltigem Chromdioxid bestehenden, ferromagnetischen Materials, das, bezogen auf den Anteil an Chromdioxid, weniger als 2 ppm Iridium und weniger als 50 ppm Kobalt enthält, durch Zersetzung eines wasserhaltigen Chrom(III)chromats bei Temperaturen von 200 bis 500°C und unter einem Druck zwischen 50 und 700 bar, dadurch gekennzeichnet, daß man ein wasserhaltiges Chrom(III)chromat der Formel $Cr_2(CrO_4)_3 \cdot nH_2O$ mit einem Hydratationsgrad n von mindestens 13 einsetzt, welches Eisen und/oder eine Eisenverbindung als Modifizierungsmittel enthält, dieses wasserhaltige Chrom(III)chromat in einem Hochdruckreaktor auf eine Temperatur zwischen 200 und 500°C aufheizt und unmittelbar nach Erreichen dieser Temperatur abkühlt.

2.  Verfahren nach Anspruch 1, dadurch gekennzeichnet, daß das wasserhaltige Chrom(III)chromat als weitere(s) Modifizierungsmittel Antimon, Tellur und/oder eine Verbindung dieser Elemente enthält.

3.  Verfahren nach Anspruch 1 oder 2, dadurch gekennzeichnet, daß das wasserhaltigen Chrom(III)chromat als Modifizierungsmittel Eisenoxid enthält.

4.  Verfahren nach den Ansprüchen 1 bis 3, dadurch gekennzeichnet, daß man das oder die Modifizierungsmittel in Mengen zwischen 0,05 und 10 Gew.-%, berechnet als Oxid, bezogen auf das resultierende Chromdioxid, einsetzt.

5.  Verfahren nach den Ansprüchen 1 bis 4, dadurch gekennzeichnet, daß man ein wasserhaltiges Chrom(III)chromat mit einem Hydratationsgrad n von 14 bis 20 einsetzt.

6.  Verfahren nach Anspruch 6, dadurch gekennzeichnet, daß man das resultierende Material unmittelbar nach Erreichen der Reaktionstemperatur schnell auf eine Temperatur unter 250°C abkühlt.


**Claims**

1.  A process for the preparation of an acicular, ferromagnetic material which essentially consists of iron-containing chromium dioxide and contains, based on the amount of chromium dioxide, less than 2 ppm of iridium and less than 50 ppm of cobalt, by decomposition of a hydrated chromium(III) chromate at from 200 to 500°C and from 50 to 700 bar, wherein a hydrated chromium(III) chromate of the formula $Cr_2(CrO_4)_3 \cdot nH_2O$ which has a degree of hydration n of at least 13 and contains iron and/or an iron compound as modifiers is used, and this hydrated chromium(III) chromate is heated to 200-500°C in a high-pressure reactor and is cooled immediately after this temperature is reached.

2.  A process as claimed in claim 1, wherein the hydrated chromium(III) chromate contains, as further modifiers, antimony, tellurium and/or a compound of these elements.

3.  A process as claimed in claim 1 or 2, wherein the hydrated chromium(III) chromate contains iron oxide as a modifier.

4.  A process as claimed in any of claims 1 to 3, wherein the modifier or modifiers is or are used in amounts of from 0.05 to 10% by weight, calculated as oxide and based on the resulting chromium dioxide.

5.  A process as claimed in any of claims 1 to 4, wherein a hydrated chromium(III) chromate having a degree of hydration n of from 14 to 20 is used.

6.  A process as claimed in any of claims 1 to 5, wherein, immediately after the reaction temperature is reached, the resulting material is rapidly cooled to below 250°C.


**Revendications**

1.  Procédé de préparation d'un matériau ferromagnétique aciculaire, constitué essentiellement de dioxyde de chrome ferreux, et qui contient, rapportés à la portion de dioxyde de chrome, moins de 2 ppm d'iridium

EP 0 368 093 B1

et moins de 50 ppm de cobalt par réaction d'un chromate de chrome (III) hydraté à des températures de 200 à 500°C et sous une pression comprise entre 50 et 700 bar, caractérisé par le fait que l'on utilise un chromate de chrome (III) hydraté de formule $Cr_2(CrO_4)_3 \cdot nH_2$, à degré n d'hydratation d'au moins 13, et qui contient du fer et/ou un composé ferreux comme agent de modification, qu'on porte ce chromate de chrome (III) hydraté, dans un réacteur haute pression, à une température comprise entre 200 et 500°C et qu'on le refroidit directement après atteinte de cette température.

2. Procédé selon la revendication 1, caractérisé par le fait que le chromate de chrome (III) hydraté contient de l'antimone, du tellure et/ou une composé de ces éléments, comme autres agents de modification.

3. Procédé selon la revendication 1 ou 2, caractérisé par le fait que le chromate de chrome (III) hydraté contient de l'oxyde de fer comme agent de modification.

4. Procédé selon les revendications 1 à 3, caractérisé par le fait que l'on utilise le ou les agents de modification en quantités comprise entre 0,05 et 10 % en poids, calculés comme oxyde, rapportés au dioxyde de chrome résultant.

5. Procédé selon les revendications 1 à 4, caractérisé par le fait que l'on utilise un chromate de chrome (III) hydraté, d'un degré d'hydratation n de 14 à 20.

6. Procédé selon les revendications 1 à 5, caractérisé par le fait que l'on refroidit le matériau résultant rapidement à une température inférieure à 250°C, directement après atteinte de la température de réaction.

Fig. 1